Europäisches Patentamt

European Patent Office

Office européen des brevets

(11) Publication number: **0 250 039 B1**

## EUROPEAN PATENT SPECIFICATION

(45) Date of publication of patent specification: **10.02.93**   (51) Int. Cl.⁵: **G05D 1/04**

(21) Application number: **87201112.7**

(22) Date of filing: **12.06.87**

(54) **A method for the determination of the optimal altitude for a vehicle, flying at a low altitude over a sea surface.**

(30) Priority: **19.06.86 SE 8602728**

(43) Date of publication of application:
**23.12.87 Bulletin 87/52**

(45) Publication of the grant of the patent:
**10.02.93 Bulletin 93/06**

(84) Designated Contracting States:
**DE FR GB IT**

(56) References cited:
**DE-B- 2 436 791**
**DE-B- 2 511 233**
**GB-A- 2 043 388**

(73) Proprietor: **SAAB MISSILES AKTIEBOLAG**

**S-58188 Linköping(SE)**

(72) Inventor: **Axelsson, Sune**
**Roshagsvägen 24**
**S-582 70 Linköping(SE)**

(74) Representative: **Lundquist, Arne**
**Patent Department SAAB-SCANIA AB**
**S-581 88 Linköping(SE)**

Rank Xerox (UK) Business Services

## Description

The present invention relates to a method for the determination The altitude of the optimal altitude for control of the altitude of a vehicle, flying at a low altitude over a sea surface, like an anti-ship missile. The objectmissile, which method comprises the determination of the distance between the sea surface and the vehicle by an altimeter, placed in the vehicle, which altimeter gives an altitude signal, which varies depending on the wave movements of the sea surface, which method comprises the processing of the altitude signal in a signal processing unit, which gives an altitude control signal to the steering means of the vehicle, depending on the difference between the actual altitude and the optimal altitude.

The invention also relates to a device for carrying out the method.

In order to avoid detection by radar or other reconnaissance equipment, and in order to, if possible, hit a marine target directly, an anti-ship missile should fly towards the target at the lowest possible altitude, but with a safe margin to the crests of the waves. For high sea-states, the missile must be commanded to a considerably higher path than for calm sea. As the sea-state often varies locally along a missile trajectory, it is desirable to control the altitude of the missile according to the local sea-state. The optimal altitude for the missile has to be determined according to the local sea-state. For this purpose it is necessary to provide the missile with an altimeter, which measures the vertical distance between the vehicle and the sea surface along the trajectory of the missile towards the target.

From DE Auslegeschrift 24 36 791 a method is known for the control of the altitude of a vehicle flying towards a marine target. This known method comprises the determination of the distance between the vehicle and the sea surface by an altimeter, carried by the vehicle. Every determined minimal value of this distance, which thus corresponds to a wave crest, is stored in a sample-and-hold circuit during a certain period of time, which corresponds approximately to a wave period. The stored minimal value is compared, in a command circuit, with a reference altitude. If the stored minimal value should not coincide with the reference altitude, the command circuit will give such an altitude control signal to the steering means of the vehicle, that the flight path of the vehicle will be placed on an altitude above the wave top in question, corresponding to the reference altitude. The optimal altitude consists, according to DE Auslegeschrift 24 36 791, of the reference altitude plus the height of the wave top, that is to say the wave amplitude. As the reference altitude is constant, the optimal altitude in this case consists of a constant term and a variable term, which is equal to the wave top height. The last term thus forms the part by which the optimal altitude can be varied as a function of the sea state. This term, however, only makes possible rather slight variations, which means, that the reference altitude must be chosen unnecessarily high at low sea-states in order to maintain a low risk for a wave hit at high sea-states.

The object of the present invention is to provide a method and a corresponding device for the determination of the optimal altitude, in which the information on the wave movement obtained by a measurement of the distance between the vehicle and the sea surface, combined with knowledge of the statistics of the wave movements, is utilized efficiently in order to determine a term, which is dependent on the locally prevailing sea state, and which corresponds substantially to the variable term, mentioned above, which makes it possible to change the optimal altitude considerably, when needed, and which thus admits, that a term, corresponding substantially to said constant term, is given a rather low value, without increasing the risk of a wave hit.

This object is achieved, according to the present invention, by a method, which is of the art mentioned introductorily, and is characterized by the fact that the altitude signal is filtered in the signal processing unit to eliminate any superimposed signals, the frequencies of which are outside a predetermined range of frequencies, comprising the range of frequencies of the wave movement, that the rms-value, that is to say the standard deviation or a value related to this of the filtered altitude signal like the mean amplitude, is determined in the signal processing unit, that an acceptable risk $P_o$ for a wave hit of the vehicle is established, and that the optimal altitude is calculated from the rms-value determined and from the established risk for a wave hit for the vehicle.

The optimal altitude is advantageously calculated considering the systematic errror of measurement of the altimeter and the variation of altitude of the vehicle around the reference altitude. Here it is preferably presumed, that the systematic error of measurement of the altimeter and the variation of altitude of the vehicle are normally distributed with the mean value zero and the standard deviations $\sigma_F$ and $\sigma_h$, in which case the optimal altitude $H_o$ is calculated from the relationship

$$H_o = K_o \sqrt{\sigma_F{}^2 + \sigma_h{}^2 + \sigma_v{}^2} \quad \text{with} \quad K_o = \sqrt{2\ln(\frac{L_o}{P_o \lambda_o})} \ ,$$

where $\sigma_v$ is the standard deviation of the sea-surface deviation due to the wave movement, $L_o$ is the flight range of the vehicle and $\lambda_o$ is the characteristic wave length of the wave movement.

If the altitude variation of the vehicle around the reference altitude is presumed to be independent of external effects said predetermined range of frequencies is preferably chosen such, that the altitude variation of the vehicle around the reference altitude is eliminated, when the altitude signal is filtered, whereby the filtered altitude signal corresponds to the wave movement and its rms-value corresponds to the local standard deviation of the wave structure, in which case the optimal altitude $H_o$ is calculated from the relationship

$$H_o = \sqrt{H_{oo}{}^2 + K_o{}^2 \sigma_v{}^2}$$

where $H_{oo}$ is the optimal altitude $H_o$ ($\sigma_v = 0$) at a sea surface without any wave movement. Then $H_o$ can be calculated from the approximate relationship $H_o = H_{oo} + K_o \sigma_v$.

If one cannot look away from the impact of the external effects on the variation of the altitude of the vehicle around the reference altitude, said predetermined range of frequencies is preferably chosen such, that the filtered altitude signal corresponds to the sum of the wave movement and the variation of the altitude of the vehicle around the reference altitude, whereby its rms-value corresponds to

$$\sqrt{\sigma_v{}^2 + \sigma_h{}^2}$$

The optimal altitude $H_o$ in this case can be calculated from the approximate relationship

$$H_o = H'_{oo} + K_o \sqrt{\sigma_v{}^2 + \sigma_h{}^2 - \sigma_{h_o}{}^2}$$

where $H'_{oo}$ is the optimal altitude $H_o$ ($\sigma_v = 0$) at a sea surface without any wave movement and

$$\sigma_{h_o}$$

is the value for $\sigma_h$ at a calm sea, or from the approximate relationship

$$H_o = H'_{oo} + K_o \sqrt{\sigma_v{}^2 + \sigma_h{}^2}$$

The invention will now be described more in detail, reference being made to the enclosed drawings.

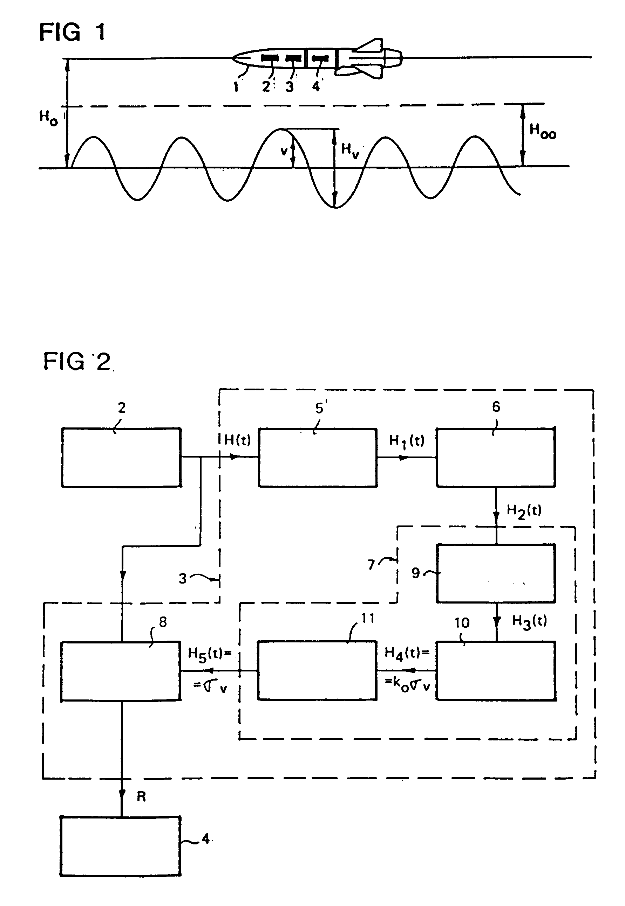

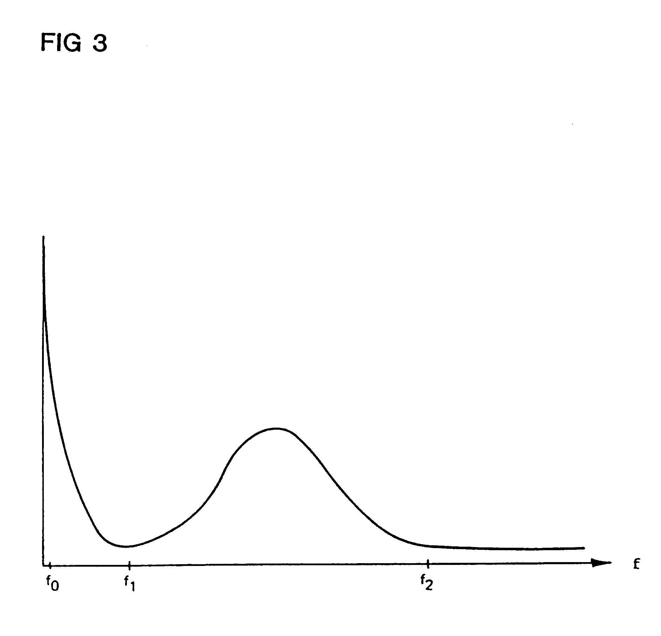

Figure 1 shows an anti-ship missile, flying at a low altitude over a sea surface. Figure 2 is a block diagram showing an altimeter, a signal processing unit and the steering means for the missile. Figure 3 shows the signal spectrum of the altitude signal.

In figure 1 an anti-ship missile 1 is shown, flying at a low altitude over a rough sea surface.

3

The wave movements of sea surfaces have been studied extensively both empirically and theoretically. The statistic properties of the waves have been given a special attention. According to "Fundamental of the behaviour of ships in waves", Int. Shipbuilding Progress - Vol. 6, No. 63, - Nov. 1959 it has been found, that the momentary value v of the wave movement (fig. 1) whereby here is meant the momentary height deviation of the sea surface from the average value at smooth sea, can be regarded as normally distributed

$$P(v) = \frac{1}{\sqrt{2\pi}\sigma_v} e^{-\frac{v^2}{2\sigma_v^2}}$$

where $\sigma_v$ is the standard deviation of the momentary value of the sea surface deviation.

According to the same reference the wave height $H_v$ (fig. 1) whereby here is meant the vertical distance between the wave top and the wave through, can be regarded as Rayleigh-distributed

$$P(H_v) = \frac{H_v}{4\sigma_v^2} e^{-\frac{H_v^2}{8\sigma_v^2}}$$

The so-called wave spectrum determines how rapidly the momentary wave height varies along a flight path. Several models for the determination of the dependence of the wave spectrum on wind force, the duration of the wind etc. have been proposed. As an example the Neuman-Pierson model can be mentioned, described in G. Neuman, Pierson, "A comparison of various theoretical wave spectra, Proceedings of a symposium of the behaviour of ships in a seawave", Vol. 1 - 2, 1957, and its successor the Pierson-Moskowitz model, which was adopted in 1964 by ISSC (International Ship Structurers Congress) as a model for completely developed sea. From measurements from lighthouses along the Swedish coast Statens Skeppsprovningsanstalt has calibrated these models for Swedish conditions.

In the missile 1 there is provided an altimeter 2 (fig. 2), which is for instance a radar altimeter. The altimeter 2 continuously measures the distance between the missile 1 and the sea surface and gives an altitude signal H(t) corresponding to this distance to a signal processing unit 3, which in the example shown (fig. 1) is placed in the missile, but which can also be placed in a fixed site. The signal processing unit 3 receives the altitude signal H(t) and converts it to give to the steering means 4 of the missile 1 an altitude control signal R, which is dependent on the difference between the actual altitude of the missile 1 and the optimal altitude $H_o$ (in the example shown in fig. 1 there is no difference, but the actual altitude is equal to the optimal altitude).

The altitude signal H(t) contains several components and may be written H(t) = $H_o$ + F + h(t) - v(t) + n(t), where $H_o$ as has been mentioned is the optimal altitude, F is a constant deviation from the reference altitude, dependent on systematic errors in the altimeter, h(t) is the slow variation of the altitude of the missile around the reference altitude, v(t) is the variation generated by the wave movement and n(t) is a noise component.

In figure 3 the signal spectrum of the altitude signal H(t) is shown. The components of the altitude signal H(t) lie in different frequency ranges. $H_o$ and F have the frequency zero, h(t) is concentrated to the frequency range $0 < f < f_1$ in fig. 3. v(t) lies in the frequency range $f_1 < f < f_2$ in fig. 3, whilst n(t) substantially has frequencies, which are larger than $f_2$. Usually $f_1$ is of the order of magnitude of 1 Hz or less and $f_2$ is about 5 - 20 Hz depending on the sea state.

The signal processing unit 3 comprises a high-pass filter 5, a low pass filter 6, means 7 for the determination of rms-value (root mean square value) and a calculation means 8 for calculation and emitting of said control signal R.

The altitude signal H(t) is allowed to pass the high-pass filter 5, which has the pass-band $f > f_1$ and thus suppresses the components $H_o$, F and h(t) but lets the wave movement component v(t) and the noise component n(t) pass. The filtered signal $H_1(t)$, which is the output of the high-pass filter 5, is allowed to pass the low-pass filter 6, which has the pass-band $f < f_2$ and thus suppresses thehigh-frequency noise component n(t) but lets the wave movement component v(t) pass. The wave movement component v(t) thus forms the only remaining component of the altitude signal H(t) in the filtered signal output $H_2(t)$ from by the low-pass filter 6.

The filtered signal $H_2(t)$ is connected to a rectifier 9, which forms part of the means 7. The rectified output signal $H_3(t)$, is connected to a low-pass filter 10, which also forms part of the means 7. The signal $H_4(t)$, emitted from the low pass filter 10, is directly proportional to the rms-value of the wave movement and thus also to its standard deviation $_v$. Here $H_4(t) = k_o\sigma_v$. As the momentary value of the wave movement is normally distributed, $k_o$ is $= \sqrt{2/\pi}$ if the rectifier 9 is a full-wave rectifier, and $k_o$ is $= 1/2 \sqrt{2/\pi}$, if the rectifier 9 is a half-wave rectifier. The signal $H_4(t)$ is connected to an amplifier 11, which also forms part of the means 7, and which has the gain $1/k_o$ and thus emits a signal $H_5(t)$, which is equal to the standard deviation $_v$ for the momentary value of the wave movement. The signal $H_5(t)$ is received by the means 8, which calculates the optimal altitude $H_o$ in a way to be described more in detail below. The means 8 also receives the signal H(t) from the altimeter 2 and therefrom it determines the actual altitude of the missile 1. The means 8 then compares the actual altitude with the optimal altitude $H_o$ and emits an altitude control signal R, depending on the difference between them, to the steering means 4 of the missile 1.

To calculate the optimal altitude $H_o$ firstly an acceptable risk $P_o$ is established for a wave hit by the missile 1. If the systematic error of measurement F of the altimeter 2 and the variation of altitude h(t) of the missile 1 around the reference altitude is presumed to be normally distributed with the mean value 0 and the standard deviation $\sigma_F$ and $\sigma_h$, the risk or probability $P_o$ that the missile should hit the waves during a flight range $L_o$ can be given by the following approximate relationship, provided that $H_v$ is Rayleigh-distributed according to the formula, which has been given earlier.

$$P_o \approx \frac{L_o}{\lambda_o} e^{-\frac{H_o^2}{2(\sigma_F^2 + \sigma_h^2 + \sigma_v^2)}} \qquad \ldots\ldots (1)$$

Here $\lambda_o$ is the characteristic wave length of the waves, which can be determined from the altitude signal H(t), for instance by counting the number $N_o$ of zero-crossings for the filtered signal $H_2(t)$ during a certain period of time T, whereupon $\lambda_o$ is calculated from

$$\lambda_o = \frac{2V_o \cdot T}{N_o}$$

where $V_o$ is the speed of flight for the missile 1. Alternatively empiric relationships between $\sigma_v$ and $\lambda_o$ can be utilized for an estimation of $\lambda_o$ for instance according to Pierson-Moskowitz model, which has been mentioned earlier.

The relationship (1) may be written

$$H_o = K_o \sqrt{\sigma_F^2 + \sigma_h^2 + \sigma_v^2} \qquad \ldots\ldots (2)$$

where

$$K_o = \sqrt{2 \ln \left(\frac{L_o}{P_o \lambda_o}\right)}$$

In this expression, $\lambda_o$ as well as $L_o$ vary, but they have fairly little influence on $K_o$, and thus $K_o$ can often be regarded as constant. As an example it can be mentioned, that $K_o = 4.8$, if $L_o = 50$ km, $\lambda_o = 50$ m and

$P_o = 0.01$, and that $K_o = 5.4$ if $L_o = 200$ km, $\lambda_o = 10$ m and $P_o = 0.01$.

If the variation of the altitude $h(t)$ of the missile around the reference altitude is presumed to be independent of external conditions, which here means the weather, that causes the wave movement and thus has an influence on $\sigma_v$, the relationship (2) can be written

$$H_o = \sqrt{H_{oo}^2 + K_o^2 \sigma_v^2} \qquad \cdots \cdot (3)$$

where $H_{oo}$ is optimal altitude at calm sea ($\sigma_v = 0$)

$$H_{oo} = K_o \sqrt{\sigma_F^2 + \sigma_h^2}$$

is according to the presumption constant, that is to say independent of the external conditions. $\sigma_F$ and $\sigma_h$ can be determined by simulations or experiments.

A linear approximation of the relationship (3) gives

$$H_o = H_{oo} + K_o \sigma_v \qquad (4)$$

A comparison between the relationships (3) and (4) shows, that the relationship (4) gives a somewhat too high optimal altitude $H_o$ at low states of sea.

In the approximation above of the relationship (2) the variation of the altitude $h(t)$ of the missile 1 around the reference altitude was presumed to be independent of the external conditions. If this influence cannot be neglected, the limit frequency of the high-pass filter 5 is given a value, that is so much less than $f_1$, that the high-pass filter will, like before, suppress the components $H_o$ and $F$ of the altitude signal $H(t)$, but will let through the components $v(t)$ and $n(t)$ and also the component of altitude variation $h(t)$. Instead of $\sigma_v$ the amplifier 11 will now emit a signal $H_5(t)$, that is

$$\sqrt{\sigma_v^2 + \sigma_h^2}.$$

The relationship (2) for this case can be written

$$H_o = \sqrt{H'_{oo}^2 + K_o^2 (\sigma_v^2 + \sigma_h^2 - \sigma_{h_o}^2)} \qquad \cdots \cdot (3')$$

where $H'_{oo}$ is optimal altitude at calm sea ($\sigma_v = 0$) and

$$\sigma_{h_o}$$

is the value for $\sigma_h$ at calm sea.

6

$$H'_{oo} = K_o \sqrt{\sigma_F^2 + \sigma_{h_o}^2}$$

which is constant. $\sigma_F$ and

$$\sigma_{h_o}$$

can be determined by simulations or experiments. A linear approximation of the relationship (3') gives

$$H_o = H'_{oo} + K_o \sqrt{\sigma_v^2 + \sigma_h^2 - \sigma_{h_o}^2} \qquad \dots \dots (4')$$

If

$$\sigma_{h_o}$$

is considerably smaller than $\sigma_h$ the relationship (4') can be approximated further by

$$H_o \qquad H'_{oo} + K_o \sqrt{\sigma_v^2 + \sigma_h^2} \qquad \dots \dots (4'')$$

For certain algorithms the realization is facilitated, if the rectifier 9 is instead formed as a quadratic detector, so that $H_3(t) = k_o H_2(t)^2$. The outgoing signal from the amplifier 11 is then given by $H_5(t) = \sigma_v^2$, if only the component of wave movement $v(t)$ is allowed to pass both filters 5 and 6, and by $H_5(t) = \sigma_v^2 + \sigma_h^2$, if the component of wave movement $v(t)$ as well as the component of variation of the altitude $h(t)$ are allowed to pass.

**Claims**

1. A method for the determination of the optimal altitude for altitude control of a vehicle (1), flying at a low altitude over a sea surface, like an anti-ship missile, which method comprises the determination of the distance between the sea surface and the vehicle by an altimeter (2), placed in the vehicle, which altimeter gives an altitude signal (H(t)) corresponding to this distance, which signal varies depending on the wave movements of the sea surface, which method comprises the processing of the altitude signal in a signal processing unit (3), which gives an altitude control signal (R) to the steering means (4) of the vehicle, depending on the difference between the actual altitude and the optimal altitude $H_o$, **characterized** by the fact that the altitude signal (H(t)) is filtered in the signal processing unit (3) to eliminate any superimposed signals, the frequencies of which are outside of a predetermined range of frequencies, comprising the range of frequencies of the wave structure, that the rms-value, that is to say the standard deviation, or a value related to this, of the filtered altitude signal (H_2(t), like the mean amplitude is determined in the signal processing unit (3), that an acceptable risk $P_o$ for a wave hit of the vehicle (1) is established, and that the optimal altitude $H_o$ is calculated from the rms-value determined or a value related to this and from the established risk $P_o$ of a wave hit for the vehicle.

2. A method according to claim 1, **characterized** in that the optimal altitude $H_o$ is calculated considering the systematic measurement error of the altimeter (2) and the variation of altitude around the reference altitude of the vehicle (1).

3. A method according to claim 2, **characterized** in that it is presumed, that the systematic error of measurement of the altimeter and the variation of altitude of the vehicle are normally distributed with the mean value zero and the standard deviation $\sigma_F$ and $\sigma_h$, and that the optimal altitude $H_o$ is calculated from the relationship

$$H_o = K_o \sqrt{\sigma_F^2 + \sigma_h^2 + \sigma_v^2} \quad \text{with} \quad K_o = \sqrt{2\ln(\frac{L_o}{P_o\lambda_o})} \,,$$

where $\sigma_v$ is the standard deviation of the momentary value of the wave movement, $L_o$ is the flight range of the vehicle and $\lambda_o$ is the characteristic wave length of the wave movement.

4. A method according to claim 3, **characterized** in that the altitude variation of the vehicle (1) around the commanded altitude is presumed to be independent of outer circumstances, and that said predetermined range of frequencies is chosen such, that the altitude variation of the vehicle around the reference altitude is eliminated, when the altitude signal ($H(t)$) is filtered, whereby the filtered altitude signal ($H_2(t)$) corresponds to the wave movement and its rms-value corresponds to the standard deviation $\sigma_v$ of the momentary value of the wave movement, and that the optimal altitude $H_o$ is calculated from the relationship

$$H_o = \sqrt{H_{oo}^2 + K_o^2\sigma_v^2}$$

where $H_{oo}$ is the optimal altitude $H_o$ over a calm sea surface ($\sigma_v = 0$).

5. A method according to claim 4, **characterized** in that the optimal altitude $H_o$ is calculated from the approximate relationship

$$H_o = H_{oo} + K_o\sigma_v.$$

6. A method according to claim 3, **characterized** in that said predetermined range of frequencies is chosen such, that the filtered altitude signal ($H_2(t)$) corresponds to the sum of the wave movement and the variation of the altitude of the vehicle around the reference altitude, whereby its rms-value corresponds to

$$\sqrt{\sigma_v^2 + \sigma_h^2} \,.$$

7. A method according to claim 6, **characterized** in that the optimal altitude $H_o$ is calculated from the approximate relationship

$$H_o = H'_{oo} + K_o \sqrt{\sigma_v^2 + \sigma_h^2 - \sigma_{h_o}^2}$$

where $H'_{oo}$ is the optimal altitude $H_o$ ($\sigma_v = 0$) at a sea surface without any wave movement and

$$\sigma_{h_o}$$

is the value for $\sigma_h$ at a calm sea.

8. A method according to claim 6, **characterized** in that the optimal altitude $H_o$ is calculated from the approximate relationship

$$H_o = H'_{oo} + K_o \sqrt{\sigma_v^2 + \sigma_h^2}$$

where $H'_{oo}$ is the optimal altitude $H_o$ ($\sigma_v = 0$) at a sea surface without any wave movement.

9. A device for altitude control to optimal altitude for a flying vehicle (1) like an anti-ship missile, intended tfly over a sea surface at a relatively low altitude, comprising an altimeter, placed in the vehicle (1), which altimeter, provided to measure the distance between the sea surface and the vehicle and to give an altitude signal (H(t)), corresponding to this distance, which signal varies in dependence on the wave structure of the sea surface, further comprising a signal processing unit (3) provided to receive said altitude signal (H(t)) and to give to the steering means (4) of the vehicle (1) an altitude control signal (R) in dependence on the difference between the actual altitude of the vehicle and the optimal altitude $H_o$, **characterized** in that the signal processing unit (3) is provided to:
   - filter the altitude signal (H(t)) to eliminate any superimposed signals, the frequencies of which lie outside of a predetermined range of frequencies comprising the range of frequencies of the wave movement,
   - determine the rms-value of the filtered altitude signal (H(t)),
   - calculate the optimal altitude $H_o$ considering the rms-value determined and an established acceptable risk $P_o$ of a wave hit for the vehicle (1).

## Patentansprüche

1. Verfahren zur Bestimmung der optimalen Höhe für die Höhensteuerung eines Fahrzeugs (1), welches in geringer Höhe über die Wasseroberfläche fliegt, beispielsweise einer Anti-Schiffsrakete, wobei das Verfahren die Bestimmung der Entfernung zwischen der Wasseroberfläche und dem Fahrzeug mittels eines im Fahrzeug angeordneten Entfernungsmeßgerätes (2) umfaßt, welches ein Höhensignal (H(t)) entsprechend der Entfernung liefert, wobei das Signal sich in Abhängigkeit von der Wellenbewegungen der Wasseroberfläche verändert, und die Bearbeitung des Höhensignals in einer Signalbearbeitungseinrichtung (3), die ein Höhensteuerungssignal (R) zur Steuerungseinrichtung des Fahrzeugs (4) liefert, das von der Differenz zwischen momentaner Höhe und der optimalen Höhe $H_o$ abhängt, dadurch gekennzeichnet, daß das Höhensignal (H(t)) in der Signalbearbeitungseinrichtung (3) gefiltert wird, um alle überlagerten Signale auszuschalten, deren Frequenzen außerhalb eines vorbestimmten Frequenzbereiches liegen, der den Frequenzbereich der Wellenstruktur umfaßt, daß der rms-Wert, d.h. die Standardabweichung oder ein auf diese bezogener Wert des gefilterten Höhensignals $H_2(t)$ entsprechend der Hauptamplitude durch die Signalbearbeitungseinrichtung (3) bestimmt wird, daß ein annehmbares Risiko $P_o$ bezüglicheiner Wellenberührung des Fahrzeugs (1) festgelegt wird und daß die optimale Höhe $H_o$ aus dem bestimmten rms-Wert oder einem darauf bezogenen Wert und aus dem festgesetzten Risiko $P_o$ einer Wellenberührung des Fahrzeugs (1) berechnet wird.

2. Verfahren nach Anspruch 1, dadurch gekennzeichnet, daß die optimale Höhe $H_o$ unter Berücksichtigung des systematischen Meßfehlers des Höhenmessers (2) und der Variation der Höhe um die Referenzhöhe des Fahrzeugs (1) berechnet wird.

3. Verfahren nach Anspruch 2, dadurch gekennzeichnet, daß angenommen wird, daß der systematische Meßfehler des Höhenmessers und die Variationen des Fahrzeugs normalverteilt mit dem Hauptwert Null und der Standartabweichung $\sigma_F$ und $\sigma_h$ ist, und daß die optimale Höhe $H_o$ aus der Beziehung

$$H_0 = K_0 \sqrt{\sigma_F^2 + \sigma_h^2 + \sigma_v^2} \quad \text{mit} \quad K_0 = \sqrt{2 \ln \left( \frac{L_0}{P_0 \lambda_0} \right)}$$

berechnet wird, wobei $\sigma_v$ die Standartabweichung der momentanen Wellenbewegung, $L_0$ der Flugbereich des Fahrzeugs und $\lambda_0$ die charakteristische Wellenlänge der Wellenbewegung ist.

4. Vorrichtung nach Anspruch 3, dadurch gekennzeichnet, daß angenommen wird, daß die Höhenvariation des Fahrzeugs (1) um die befohlene Höhe unabhängig von äußeren Umständen (Einflüssen) ist und daß der vorbestimmte Bereich der Frequenzen derart ausgewählt wurde, daß die Höhenvariationen des Fahrzeugs um die Referenzhöhe ausgeschlossen wird, wenn das Höhensignal (H(t)) gefiltert wurde, wobei das gefilterte Höhensignal ($H_2(t)$) der Wellenbewegung und sein rms-Wert der Standartabweichung $\sigma_v$ des momentanen Wertes der Wellenbewegung entsprechen, und daß die optimale Höhe aus der Beziehung

$$H_0 = \sqrt{H_{00}^2 + K_0^2 \sigma_v^2}$$

berechnet wird, wobei $H_{00}$ die optimale Höhe $H_0$ über einer ruhigen Wasseroberfläche ($\sigma_v = 0$) ist.

5. Verfahren nach Anspruch 4, dadurch gekennzeichnet, daß die optimale Höhe $H_0$ aus der näherungsweisen Beziehung

$$H_0 = H_{00} + K_0 \sigma_v$$

berechnet wird.

6. Verfahren nach Anspruch 3, dadurch gekennzeichnet, daß der vorbestimmte Bereich der Frequenzen derart ausgewählt wurde, daß das gefilterte Höhensignal ($H_2(t)$) der Summe aus der Wellenbewegung und der Variation der Höhe des Fahrzeugs um die Referenzhöhe entspricht, wobei sein rms-Wert

$$\sqrt{\sigma_v^2 + \sigma_h^2}$$

entspricht.

7. Verfahren nach Anspruch 6, dadurch gekennzeichnet, daß die optimale Höhe $H_0$ aus der näherungsweisen Beziehung

$$H_0 = H'_{00} + K_0 \sqrt{\sigma_v^2 + \sigma_h^2 - \sigma_{ho}^2}$$

errechnet wird, wobei $H'_{00}$ die optimale Höhe $H_0$ ($\sigma_v = 0$) bei einer Wasseroberfläche ohne Wellenbewegung und $\sigma_{ho}$ bei ruhigem Wasser ist.

8. Verfahren nach Anspruch 6, dadurch gekennzeichnet, daß die optimale Höhe $H_0$ aus der näherungsweisen Beziehung

$$H_o = H'_{oo} + K_o \sqrt{\sigma_v{}^2 + \sigma_h{}^2}$$

berechnet wird, wobei $H'_{oo}$ die optimale Höhe $H_o$ ($\sigma_v = 0$) bei einer Wasseroberfläche ohne jede Wellenbewegung ist.

9. Vorrichtung zur Höhensteuerung einer optimalen Höhe für ein fliegendes Fahrzeug (1), beispielsweise eine Anti-Schiffsrakete, die in relativ niedriger Höhe über eine Wasseroberfläche fliegt, umfassend einen im Fahrzeug angeordneten Höhenmesser, der zur Messung des Abstands zwischen der Wasseroberfläche und dem Fahrzeug dient und ein Höhensignal (H(t)) erzeugt, das diesem Abstand entspricht, wobei das Signal in Abhängigkeit des Wellenaufbaus der Wasseroberfläche variiert, und eine Signalbearbeitungseinrichtung (3) zum Empfang des Höhensignals (H(t)) und zur Abgabe eines Höhensteuerungssignals auf die Steuerungseinrichtung (4) des Fahrzeugs in Abhängigkeit von der Differenz zwischen der Höhe des Fahrzeugs und der optimalen Höhe $H_o$, dadurch gekennzeichnet, daß die Signalbearbeitungseinrichtung (3), dazu dient,
- das Höhensignal (H(t)) zu filtern, um alle überlagerten Signale auszuschließen, deren Frequenzen außerhalb eines vorbestimmten Bereiches liegen, der den Bereich der Frequenzen der Wellenbewegung umfaßt.
- den rms-Wert des gefilterten Höhensignals (H(t)) zu bestimmen,
- die optimale Höhe $H_o$ unter Berücksichtigung des bestimmten rms-Wertes und eines festgelegten, annehmbaren Risikos $P_o$ einer Wellenberührung des Fahrzeugs (1) zu berechnen.

**Revendications**

1. Procédé de détermination de l'altitude optimale pour la commande de l'altitude d'un véhicule (1), qui vole à basse altitude au-dessus de la surface de la mer, tel qu'un missile anti-navire, lequel procédé comprend la détermination de la distance entre la surface de la mer et le véhicule au moyen d'un altimètre (2) placé dans le véhicule, lequel altimètre fournit un signal d'altitude (H(t)) correspondant à cette distance, signal qui varie en fonction des mouvements des vagues de la surface de la mer, lequel procédé comprend le traitement du signal d'altitude dans une unité de traitement de signaux (3), qui délivre un signal (R) de commande de l'altitude aux moyens de pilotage (4) du véhicule, en fonction de la différence entre l'altitude actuelle et l'altitude optimale $H_o$, caractérisé en ce que le signal d'altitude (H(t)) est filtré dans l'unité de traitement de signaux (3) de manière que soient supprimés tous les signaux superposés, dont les fréquences se situent à l'extérieur d'une gamme prédéterminée de fréquences, comprenant la gamme des fréquences de la structure des vagues, que la valeur quadratique moyenne, c'est-à-dire l'écart-type, ou une valeur associée à cette valeur, du signal d'altitude filtré ($H_2(t)$), telle que l'amplitude moyenne, est déterminée dans l'unité de traitement de signaux (3), qu'un risque acceptable $P_o$ pour une rencontre du véhicule (1) avec les vagues est établi et que l'altitude optimale $H_o$ est calculée à partir de la valeur quadratique moyenne déterminée ou d'une valeur associée à cette valeur et à partir du risque établi $P_o$ d'une rencontre du véhicule avec les vagues.

2. Procédé selon la revendication 1, caractérisé en ce que l'altitude optimale $H_o$ est calculée en tenant compte de l'erreur systématique de mesure de l'altimètre (2) et de la variation d'altitude autour de l'altitude de référence du véhicule (1).

3. Procédé selon la revendication 2, caractérisé en ce que l'on suppose que l'erreur systématique de mesure de l'altimètre et la variation de l'altitude du véhicule présentent des distributions normales présentant la valeur moyenne nulle et les écarts types $\sigma_F$ et $\sigma_h$, et que l'altitude optimale $H_o$ est calculée à partir de la relation

$$H_o = K_o \sqrt{\sigma_F{}^2 + \sigma_h{}^2 + \sigma_v{}^2} \quad \text{et} \quad K_o = \sqrt{2\ln\left(\frac{L_o}{P_o\lambda_o}\right)}.$$

dans laquelle $\sigma_v$ est l'écart-type de la valeur instantanée du mouvement des vagues, $L_o$ est l'autonomie de vol du véhicule et $\lambda_o$ est la longueur d'onde caractéristique du mouvement des vagues.

4. Procédé selon la revendication 3, caractérisé en ce que la variation de l'altitude du véhicule (1) autour de l'altitude commandée est supposée être indépendante de circonstances extérieures, et que ladite gamme prédéterminée de fréquences est choisie de telle sorte que la variation d'altitude du véhicule autour de l'altitude de référence est supprimée lorsque le signal d'altitude (H(t)) est filtré, ce qui a pour effet que le signal d'altitude filtré ($H_2$(t)) correspond aux mouvements des vagues et que sa valeur quadratique moyenne correspond à l'écart-type $\sigma_v$ de la valeur instantanée du mouvement des vagues et que l'altitude optimale $H_o$ est calculée à partir de la relation

$$H_O = \sqrt{H_{OO}{}^2 + K_O{}^2 \sigma_v{}^2}$$

dans laquelle $H_{oo}$ est l'altitude optimale $H_o$ au-dessus d'une surface de mer calme ($\sigma_v = 0$).

5. Procédé selon la revendication 4, caractérisé en ce que l'altitude optimale $H_o$ est calculée à partir de la relation d'approximation

$$H_o = H_{oo} + K_o \sigma_v.$$

6. Procédé selon la revendication 3, caractérisé en ce que ladite gamme prédéterminée de fréquences est choisie de telle sorte que le signal d'altitude filtré ($H^2$(t)) correspond à la somme du mouvement des vagues et à la variation de l'altitude du véhicule autour de l'altitude de référence sa valeur quadratique moyenne correspondant à

$$\sqrt{\sigma_v{}^2 + \sigma_h{}^2}.$$

7. Procédé selon la revendication 6, caractérisé en ce que l'altitude optimale $H_o$ est calculée à partir de la relation d'approximation

$$H_O = H'_{OO} + K_O \sqrt{\sigma_v{}^2 + \sigma_h{}^2 - \sigma_{ho}{}^2}$$

dans laquelle $H_{oo}$ est l'altitude optimale $H_o$ ($\sigma_v = 0$) à la surface de la mer sans aucun mouvement de vagues et $\sigma_{ho}$ est la valeur pour $\sigma_h$ dans le cas d'une mer calme.

8. Procédé selon la revendication 6, caractérisé en ce que l'altitude optimale $H_o$ est calculée à partir de la relation d'approximation

$$H_O = H'_{OO} + K_O \sqrt{\sigma_v{}^2 + \sigma_h{}^2}$$

où $H'_{oo}$ est l'altitude optimale $H_o$ ($\sigma_v = 0$) pour une surface de la mer sans aucun mouvement de vagues.

9. Dispositif de commande de l'altitude à une altitude optimale pour un véhicule volant (1), tel qu'un missile anti-navire, destiné à voler au-dessus de la surface de la mer à une altitude relativement basse, comprenant un altimètre placé dans le véhicule (1), lequel altimètre est destiné à mesurer la distance entre la surface de la mer et le véhicule et délivrer un signal d'altitude (H(t)), qui correspond à cette distance, lequel signal varie en fonction de la structure des vagues de la surface de la mer, et comportant en outre une unité de traitement de signaux (3) destinée à recevoir ledit signal d'altitude (H(t)) et à délivrer aux moyens de pilotage (4) du véhicule (1) un signal de commande d'altitude (R) en fonction de la différence entre l'altitude actuelle du véhicule et l'altitude optimale $H_o$, caractérisé en ce que l'unité de traitement de signaux (3) est destinée à :

- filtrer le signal d'altitude (H(t)) pour supprimer tous les signaux superposés, dont les fréquences sont situées à l'extérieur d'une gamme prédéterminée de fréquences, comprenant la gamme des fréquences du mouvement des vagues,
- déterminer la valeur quadratique moyenne du signal d'altitude filtré (H(t)),
- calculer l'altitude optimale $H_o$ en tenant compte de la valeur quadratique moyenne déterminée et d'un risque établi admissible $P_o$ d'une rencontre du véhicule (1) avec les vagues.

## FIG 1

## FIG 2

FIG 3